# EUROPÄISCHE PATENTSCHRIFT

(11) **EP 1 954 120 B1**
(45) Veröffentlichungstag und Bekanntmachung des Hinweises auf die Patenterteilung: **21.03.2012**
(21) Anmeldenummer: 06818797.0
(22) Anmeldetag: 24.11.2006
(51) Int. Cl.: A01J 5/08

(54) **ZITZENGUMMI ZUR VERWENDUNG AN EINEM MELKBECHER**
TEAT CUP RUBBER LINER FOR USE IN A TEAT CUP
CAOUTCHOUC POUR TRAYON DESTINÉ À ÊTRE UTILISÉ SUR UN RÉCIPIENT DE TRAITE

(30) Priorität: 24.11.2005 DE 102005056384; 28.04.2006 DE 102006019830
(43) Veröffentlichungstag der Anmeldung: 13.08.2008
(73) Patentinhaber: GEA WestfaliaSurge GmbH, 59199 Bönen (DE); Lincke, Kathrin, 86842 Türkheim (DE)
(72) Erfinder: WIETHOFF, Magnus, 59302 Oelde (DE); SCHULZE SCHWERING, Anne, 48145 Münster (DE); LINCKE, Kathrin, 86842 Türkheim (DE); FRENSER, Reinhard, 33378 Rheda-Wiedenbrück (DE)
(74) Vertreter: Neumann, Ditmar
(86) Internationale Anmeldenummer: PCT/EP2006/011278
(87) Internationale Veröffentlichungsnummer: WO 2007/059983

(56) Entgegenhaltungen:
- WO-A2-00/13489
- WO-A2-2005/070197
- DE-A1- 10 018 870
- DE-A1- 19 949 151
- DE-B1- 2 941 150

## Beschreibung

Der Gegenstand der Erfindung betrifft ein Zitzengummi zur Verwendung an einem Melkbecher mit einem Kopfteil der eine Einführöfnung für eine Zitze eines Tieres aufweist, wobei diese durch einen Ringschlauch begrenzt ist, und mit einem mit dem Kopfteil verbundenem Schaftteil.

Zum maschinellen Melken eines Tieres, insbesondere einer Kuh, wird ein Melkzeug verwendet, das mehrere Melkbecher aufweist. Die Melkbecher sind in der Regel über Milchschläuche mit einer Sammeleinheit verbunden. Von der Sammeleinheit wird die abgemolkene Milch in einen Milchtank geleitet. Darüber hinaus ist bekannt, dass der Melkbecher unmittelbar, d. h. ohne Zwischenschaltung einer Sammeleinheit über einen Milchschlauch mit einer Leitung des Melksystems verbunden ist.

Der Melkbecher umfasst eine Hülse, in der ein Zitzengummi angeordnet ist. Es sind unterschiedliche Ausgestaltungen eines Zitzengummis bekannt. So beschreibt beispielsweise die WO 2005/070197 ein Zitzengummi zur Verwendung an einem Melkbecher mit einem Kopfteil, an dem eine Dichtlippe vorgesehen ist, die eine Einführöffnung für die Zitze bildet Das Kopfteil ist verbunden mit einem Schaftteil.

Durch die DE 100 18 870 A1 ist ein Zitzengummi zur Verwendung an einem Melkbecher mit einem Kopfteil bekannt. Das Kopfteil weist eine Einführöffnung für eine Zitze eines Tieres auf, wobei diese Öffnung durch einen Ringschlauch begrenzt ist. Mit dem Kopfteil ist ein Schaftteil verbunden.

Problematisch beim Melken eines Tieres ist, dass der Zitzengummi die Zitze nicht einschnüren darf. Insbesondere am Ende eines Melkvorgangs kann es zu einem unerwünschten Klettern des Melkbechers an der Zitze kommen. In dem Bereich des Fürstenbergischen Venenrings am Übergang von der Zitze zum Euterboden befinden sich zahlreiche Blut- und Lymphgefäße. Dieser Bereich ist relativ empfindlich, so dass durch einen hochgekletterten Melkbecher es zu einem Abschnüren der Blut- und Lymphgefäße kommen kann. Dies führt zu einem verringerten Milchfluss bzw. zu einer negativen Haltung des Tieres beim Melken. Um jedoch ein vollständiges Ausmelken des Euters zu erreichen, ist eine Nachmelkarbeit notwendig. Hierdurch bedingt kann es zu einer Verlängerung der Melkzeit kommen, welche Auswirkungen auf die Zitzenkonditionen haben kann.

Andererseits besteht das Problem, dass die Anatomie und Größe der Zitzen mehrerer Tiere und auch eines Tieres sehr unterschiedlich sein kann.

Hiervon ausgehend liegt der vorliegenden Erfindung die Zielsetzung zugrunde ein Zitzengummi anzugeben, durch welches ein schonenderes und insbesondere schnelles Melken ermöglicht wird.

Diese Aufgabe wird erfindungsgemäß durch ein Zitzengummi zur Verwendung an einem Melkbecher mit den Merkmalen des Anspruchs 1 gelöst. Vorteilhafte Weiterbildungen und Ausgestaltungen des erfindungsgemäßen Zitzengummis sind Gegenstand der Unteransprüche.

Das erfindungsgemäße Zitzengummi zur Verwendung an einem Melkbecher mit einem Kopfteil, dass eine Einführöffnung für eine Zitze eines Tieres aufweist, wobei die Einführöffnung durch einen Ringschlauch begrenzt ist, und mit einem mit dem Kopfteil verbundenen Schaftteil zeichnet sich dadurch aus, dass zwischen dem Kopfteil und dem Schaftteil wenigstens ein Bereich vorgesehen ist, welcher eine Relativbewegung zwischen dem Kopfteil und dem Schaftteil ermöglicht.

Durch diese erfindungsgemäße Ausgestaltung des Zitzengummis wird erreicht, dass eine verbesserte Anpassung des Zitzengummis an eine Zitze ermöglicht wird.

Hierbei wirkt sich die Relativbewegung zwischen dem Kopfteil und dem Schaftteil positiv aus, da beispielsweise die Zitzen eines Tieres unter unterschiedlichen Winkeln vom Euter abstehen, so dass durch die Relativbewegung zwischen dem Kopfteil und dem Schaftteil eine verbesserte Anpassung an die Anatomie des Tieres ermöglicht wird. Die Relativbewegung zwischen dem Kopfteil und dem Schaftteil kann auch derart erfolgen, dass das Kopfteil und das Schaftteil aufeinander zu oder voneinander weg bewegbar ist. Dies hat auch den Vorteil, dass bei einem gut haftenden Kopfteil der Schaft durch eine ausgeprägte Vertikalbewegung die Zitze während des gesamten Melkvorgangs massiert bzw. stimuliert, wodurch eine Verbesserung des Melkvorgangs erreicht wird. Bedingt durch das pulsierende Kolabieren bzw. Schließen des Zitzengummis wird tendenziell die Zitze aus dem Zitzengummi herausgeschoben, was eine negative Auswirkung auf die Haftung zwischen dem Zitzengummi und der Zitze hat. Eine Relativbewegung zwischen dem Kopfteil und dem Schaftteil bewirkt zumindest teilweise eine Kompensation der Bewegung zwischen der Zitze und dem Zitzengummi.

Der Ringschlauch des erfindungsgemäßen Zitzengummis ist wenigstens teilweise mit einem Fluid oder Fluidgemisch gefüllt.

Bei dem Fluid handelt es sich um Glycerin oder Propylenglykol oder ein Wassergemisch voneinem der eiden. Insbesondere wird der Ringschlauch mit einem gesättigten Glycerin- oder Propylenglykol-Wassergemisch gefüllt werden, so dass ein konstantes Volumen im Ringschlauch erreicht wird.

Der Bereich, zwischen dem Kopfteil und dem Schaftteil, ist vorzugsweise so ausgebildet, dass dieser ein Gelenk bildet. Dabei können auch mehrere Gelenke vorgesehen sein.

Eine besonders bevorzugte Ausgestaltung des Bereichs wird darin gesehen, dass der Bereich im Querschnitt wellenförmig ausgebildet ist. Hierdurch wird eine Relativbewegung zwischen dem Kopfteil und dem Schaftteil im Raum ermöglicht. Darüber hinaus wird eine Bewegung in Längsrichtung des Zitzengummis zugelassen.

Der Bereich zwischen dem Kopfteil und dem Schaftteil ist vorzugsweise in form eines Filmgelenks ausgebildet Besonders bevorzugt ist eine Ausbildung, bei der der Bereich elastisch ausgebildet ist. Gemäß einer noch weiteren vorteilhaften Ausbildung des erfindungsgemäßen Zitzengummis wird vorgeschlagen, dass der Bereich aus einem Material gebildet ist, welches sich von dem Material des Schaftteils und/oder des Kopfteils unterscheidet, vorzugsweise eine höhere Elastizität aufweist. Die ovale Kontur hat den weiteren Vorteil, dass einem eventuell vorhandenen Füllmittel Pufferraum zur Verfügung gestellt wird, da sich die ovale Kontur zu einer annähernd runden Kontur aufwölben lässt. Dies ist bei einer kreisrunden Kontur nicht möglich.

Ferner wird vorgeschlagen, dass der Ringschlauch des Zitzengummis einen im Wesentlichen elliptischen Querschnitt aufweist. Bei dem elliptischen Querschnitt muss es sich nicht zwingend um einen elliptischen Querschnitt im mathematischen Sinne handeln. Es besteht auch die Möglichkeit, dass der Querschnitt oval ist. Durch die vorteilhafte Weiterbildung wird erreicht, dass die Höhe des Kopfes verringert wird, wodurch insbesondere bei kurzen Zitzen diese auch ausreichend in das Schaftteil hineinragen können. Durch den verringerten Abstand von der Oberkante des Kopfteils bis zum Schaftanfang wird bei kürzeren Zitzen ein schonenderes Melken erreicht.

Besonders vorteilhaft, ist es, wenn der Ringschlauch einen Querschnitt mit einer lichten Höhe und einer lichten Breite aufweist, wobei das Verhältnis der Höhe zur Breite kleiner 0,9 ist, vorzugsweise zwischen 0,75 und 0,4 liegt, insbesondere 0,5 beträgt. Hierdurch wird die Möglichkeit geschaffen, dass das Kopfteil nicht nach innen, das heißt in Richtung des Schaftteils beim Ansetzen der Zitze gezogen wird.

Gemäß einer noch weiteren vorteilhaften Ausgestaltung des erfindungsgemäßen Zitzengummis wird vorgeschlagen, dass innerhalb des Ringschlauchs und wenigs-tens über ein Teil des Umfangs des Ringschlauchs wenigstens eine Rippe vorge-sehen ist. Durch diese Rippe wird vermieden, dass das Kopfteil während eines Melkvorgangs in Richtung des Schaftteils und zur Zitze hingezogen wird, und so zu Abschnürungen und/oder Lufteinbrüchen führt.

Sind mehrere Rippen vorgesehen, so wird vorgeschlagen, dass diese vorzugsweise äquidistant zueinander angeordnet sind.

Zur Vereinfachung der Herstellung des Ringschlauchs wird nach einer noch weiteren vorteilhaften Ausbildung des erfindungsgemäßen Zitzengummis vorgeschlagen, dass der Ringschlauch in Umfangsrichtung betrachtet einen Verbindungsbereich aufweist. Bevorzugt ist dabei eine Ausbildung, bei der der Verbindungsbereich durch eine form- und/oder kraftschlüssige Verbindung ausgebildet ist. Hierzu kann der Verbindungsbereich mit entsprechenden Rastmitteln ausgebildet sein. So können diese Rastmittel eine Nut aufweisen, in die ein entsprechender Vorsprung hineinragt.

Um sicherzustellen, dass sich die Verbindung nicht löst, kann der Verbindungsbereich durch eine Klebeverbindung gebildet sein. Durch die Klebeverbindung wird auch eine dichte Verbindung erzielt, was insbesondere dann vorteilhaft ist, wenn, wie nachstehend erläutert, der Ringschlauch wenigstens teilweise mit einem Fluid oder einem Fluidgemisch gefüllt ist.

Handelt es sich bei dem Fluid oder dem Fluidgemisch um ein inkompressibles Fluid, so ist es vorteilhaft, wenn der Ringschlauch einen nicht kreisförmigen Querschnitt aufweist. Bevorzugt ist dabei eine elliptische Ausbildung des Ringschlauchs. Es besteht auch die Möglichkeit, dass der Ringschlauch im Querschnitt einen Polygonzug bildet. Eine solche Ausgestaltung des Ringschlauchs hat den Vorteil, dass beim Eintauchen der Zitze in den Ringschlauch das Fluid relativ leicht verdrängt werden kann, ohne dass ein Aufdehnen des Materials des Ringschlauchs zwingend notwendig wird.

Bei dem Fluid handelt es sich um ein lebensmitteltaugliches Fluid, welches insbesondere in dem Temperaturbereich zwischen -30° Celsius und 100° Celsius flüssig ist und nicht verdampft. Besteht das Kopfteil aus Silikon, so ist es vorteilhaft, wenn das Fluid das Silikon nicht angreift. Das Kopfteil ist vorzugsweise aus einem Kunststoff oder einem Kunststoffgemisch gebildet. Insbesondere handelt es sich um einen thermoplastischen Elastomer (TPE). Der Kunststoff, aus dem zumindest der Ringschlauch besteht, ist so gewählt, dass das Fluid und der Kunststoff aufeinander angepasst sind, insbesondere dass das Fluid den Kunststoff nicht angreift. Das Fluid ist vorzugsweise so gewählt, dass es nicht durch den Ringschlauch hindurch diffundieren kann. Gegebenenfalls kann die innere Oberfläche des Ringschlauchs mit einer Beschichtung versehen sein. Diese Beschichtung kann eine Diffusionssperre bilden.

Nach einer noch weiteren vorteilhaften Ausgestaltung des Zitzengummis wird vorgeschlagen, dass das Kopfteil aus einem Material gebildet ist, welches gegenüber dem Material des Schaftteils weicher ist. Hierdurch wird erreicht, dass ein weiches Kopfteil ein noch besseres Anpassungsverhalten an die Zitze ermöglicht. Ein weiches Kopfteil hat darüber hinaus den Vorteil, dass es sich besser an Zitzen unterschiedlicher Dimension und Position am Euter anpassen kann. Ein härteres Schaftteil hat den Vorteil, dass bei gleich bleibenden Einfaltdruck die Wandstärke abnehmen kann, was eine Materialeinsparung bewirkt. Darüber hinaus wird die mechanische Belastbarkeit des Schaftteils und somit auch die Lebensdauer des Zitzengummis erhöht. Das erfindungsgemäße Zitzengummi ist vorzugsweise so ausgebildet, dass das Kopfteil und der Bereich oder das Schaftteil und der Bereich oder das Kopfteil und der Bereich und das Schaftteil mittels eines Zwei-Komponenten-Spritzverfahrens hergestellt wird. Die Herstellung kann simultan oder seriell erfolgen. Dieses Herstellungsverfahren ermöglicht auch die Verwendung unterschiedlicher Werkstoffe und Materialien. Gegebenenfalls können im Übergangsbereich zwischen Schaftteil, Kopfteil und/oder dem Bereichstrukturen, insbesondere Mikro- oder Makrostrukturen vorgesehen sein, um die Haftung zu erhöhen.

Das Material, aus dem das Zitzengummi besteht, weist vorzugsweise eine Härte zwischen 28 und 52 Shore (A) auf, insbesondere zwischen 32 und 42 Shore (A).

Weitere Einzelheiten und Vorteile der Erfindung werden anhand eines in der Zeichnung dargestellten Ausfühungsbeispiels erläutert, ohne dass der Gegenstand der Erfindung auf dieses konkrete Ausführungsbeispiel beschränkt wird.

Es zeigen:
- Fig. 1: ein Zitzengummi im Längsschnitt,
- Fig. 2: vergrößert einen Abschnitt des Zitzengummis im Längsschnitt.

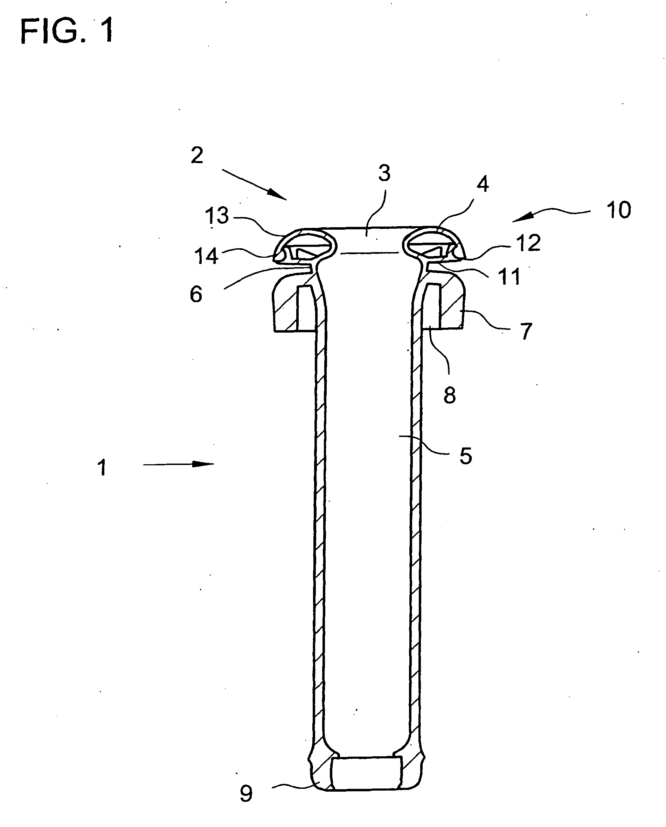

Fig. 1 zeigt schematisch ein Ausfühnmgsbeispiel eines Zitzengummis 1. zur Verwendung an einem Melkbecher. Das Zitzengummi 1 weist ein Kopfteil 2 auf. Das Kopfteil 2 weist eine Einführöffnung 3 auf, durch welche eine Zitze eines Tieres in das Zitzengummi einführbar ist. Die Einführöffnung 3 ist durch einen Ring-schlauch 4 begrenzt. Mit dem Kopfteil 2 ist ein Schaftteil 5 verbunden.

Zwischen dem Kopfteil 2 und dem Schaftteil 5 ist ein Bereich 6 vorgesehen, welcher eine Relativbewegung zwischen dem Kopfteil 2 und dem Schaftteil 5 ermöglicht. In dem dargestellten Ausführungsbeispiel ist der Bereich 6 im wesentlichen wellenförmig ausgebildet, so dass durch diese Ausbildung eine Relativbewegung zwischen dem Kopfteil und dem Schaftteil ermöglicht wird, insbesondere dann, wenn eine Zitze eines Tieres durch die Einführöffnung 3 in das Zitzengummi eingebracht wird.

Der Bereich 6 kann aus einem Werkstoff gebildet sein, welcher weicher bzw. elastischer als das Material des Schaftteils 5 bzw. des Kopfteils 2 ist.

An dem Schaftteil 5 ist ein Halterand 7 ausgebildet. Der Halterand 7 umgibt das Schaftteil 5 unter Ausbildung eines Ringspaltes 8. In den Ringspalt 8 ist eine nicht dargestellte Hülse eines Melkbechers einbringbar, so dass die Hülse mit dem Zitzengummi verbunden wird. Am unteren Abschnitt des Schaftteils 5 ist ein Anschlussstutzen 9 vorgesehen, welcher zur Verbindung mit einem Melkschlauch dient.

In dem in der Fig. 1 dargestellten Ausffühungsbeispiel weist der Ringschlauch 4 einen im Wesentlichen elliptischen Querschnitt auf. Die elliptische Ausbildung des Ringschlauches führt zu einer guten Abdichtung der Zitze im Bereich des Kopfteils 2.

Der Ringschlauch 4 weist in Umfangsrichtung betrachtet einen Verbindungsbereich 10 auf. Dieser Verbindungsbereich wird durch eine formschlüssige Verbindung gebildet. Hierzu ist in einem Wandabschnitt 11 des Ringschlauchs 4 eine Ausnehmung 12 mit Hinterschnitt vorgesehen, während in einem Wandabschnitt 13 eine Wulst 14 vorgesehen ist, welche in die Ausnehmung einbringbar ist. Die Ausbildung des Verbindungsbereiches bildet eine Rastverbindung. Zur Sicherung der Verbindung können die Wandabschnitte im Verbindungsbereich miteinander verklebt werden. Durch die Rastverbindung und insbesondere durch das Verkleben wird ein Austreten des Fluids aus dem Ringschlauch verhindert.

Der Ringschlauch 4 kann einen nicht dargestellten Anschluss aufweisen, durch den ein Fluid in den Ringschlauch 4 einbringbar ist. Die Einbringung des Fluids in den Ringschlauch kann vorzugsweise mittels einer Hohlnadel erfolgen, mittels derer das Fluid in den Ringschlauch eingespritzt wird.

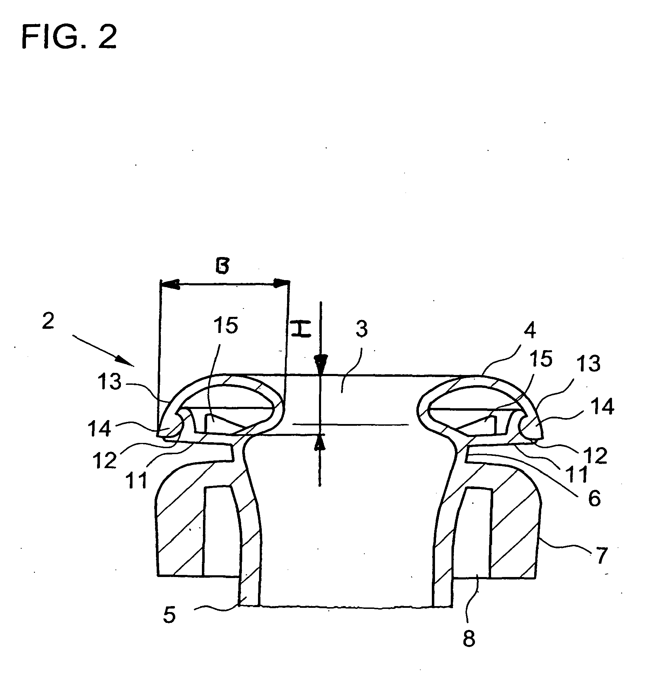

Fig. 2 zeigt ein weiteres Ausführungsbeispiel eines erfindungsgemäßen Zitzengummis. Das in der Fig. 2 dargestellte Ausführungsbeispiel stimmt im Wesentlichen mit dem Ausführungsbeispiel nach Fig. 1 überein, so dass für gleiche Bauteile die gleichen Bezugszeichen verwendet werden.

Im Unterschied zu der Ausführungsform nach Fig. 1 weist das Zitzengummi nach Fig. 2 einen Ringschlauch 4 auf, in dem Rippen 15 angeordnet sind. Durch die Rippen 15 wird verhindert, dass bei einem angesetzten Zitzengummi das Kopfteil 2 unter Vakuumeinfluss nach unten und innen gezogen wird und so zu Abschnürungen und/oder Lufteinbrüchen führt.

Das Kopfteil 2 besteht vorzugsweise aus einem Material, welches gegenüber dem Material des Schaftteils 5 weicher ist. Insbesondere ist das Zitzengummi 1 einteilig ausgebildet. Besonders bevorzugt ist dabei eine Herstellung des Zitzengummis, bei der das Kopfteil 2 und der Bereich 6 oder das Schaftteil 5 und der Bereich 6 oder das Kopfteil 2 und der Bereich 6 und das Schaftteil 5 mittels des Zwei-Komponenten-Spritzverfahrens durchgeführt wird.

Aus der Darstellung in der Fig. 2 ist ersichtlich, dass die lichten Höhe H des Ringschlauchs gegenüber der lichten Breite B kleiner eins ist. Insbesondere beträgt das Verhältnis zwischen der lichten Höhe und der lichten Breite 0,5 Der Innendurch-messer des Ringschlauchs 4 entspricht im Wesentlichen dem Innendurchmesser des Schaftteils im Bereich des Kopfteils.

Der Ringschlauch 4 ist mit einem Fluid oder Fluidgemisch gefüllt. Bei dem Fluid handelt es sich vorzugsweise um ein gesättigtes Glycerin- oder Propylenglykol-Wassergemisch. Glycerin oder Propylenglykol oder eines der beiden als Wassergemisch wird als Fluid verwendet. Der Ringschlauch 4 ist auch mit dem Fluid so ausgebildet, dass der Ringschlauch 4 verformbar ist, wenn eine Zitze in das Schaftteil 5 durch das Kopfteil 2 eingeführt wird.

Besonders bevorzugt ist eine Ausgestaltung eines Zitzengummis, bei der die Tiefe der Nut, d. h. der Abstand der Hülsen vom Innendurchmesser bis Nutaußenwand kleiner 1,5 mm beträgt. Das Verhältnis der Wandstärken sollte vorzugsweise zwischen 0,5 und 1, insbesondere bei 0,75 liegen.

In einer besonders vorteilhaften Ausbildung wird der Wandabschnitt 11 von innen nach außen schräg nach oben verlaufend ausgestaltet. Der Winkel zwischen Wandabschnitt 11 und Rotationsachse sollte zwischen 89° und 60°, vorzugsweise bei 86,5° liegen. Dies ist insbesondere beim Spülen über Kopf sinnvoll, da die Schräge bewirkt, dass kein Restspülwasser auf dem Zitzengummi verbleibt.

Der Abstand zwischen Kopfteil und Schaft sollte gering, vorzugsweise zwischen 0,5 mm und 5 mm, insbesondere bei 3 mm liegen.

### Bezugszeichenliste

- 1: Zitzengummi
- 2: Kopfteil
- 3: Einführöffnung
- 4: Ringschlauch
- 5: Schaftteil
- 6: Bereich
- 7: Halterand
- 8: Ringspalt
- 9: Anschlussstutzen
- 10: Verbindungsbereich
- 11: Wandabschnitt
- 12: Ausnehmung
- 13: Wandabschnitt
- 14: Wulst
- 15: Rippe

## Patentansprüche

1. Zitzengummi (1) zur Verwendung an einem Nielkbecher mit einem Kopfteil (2) mit einer Einführöffnung (3) für eine Zitze eines Tieres, wobei diese durch einen Ringschlauch (4) begrenzt ist, und mit einem mit dem Kopfteil (2) verbundenen Schaftteil (5), **dadurch gekennzeichnet, dass** zwischen dem Kopfteil (2) und dem Schaftteil (5) wenigstens ein Bereich (6) vorgesehen ist, welcher eine Relativbewegung zwischen dem Kopfteil (2) und Schaftteil (5) ermöglicht, dass der Ringschlauch (4) wenigstens teilweise mit einem Fluid gefüllt ist, wobei das Fluid Glycerin oder Propylenglykol oder eines der beiden als Wassergemisch verwendet.

2. Zitzengummi nach Anspruch 1, **dadurch gekennzeichnet, dass** der Bereich (6) gelenkförmig ausgebildet ist.

3. Zitzengummi nach Anspruch 1 oder 2, **dadurch gekennzeichnet, dass** der Bereich (6) im Querschnitt wellenförmig ausgebildet ist.

4. Zitzengummi nach Anspruch 1, 2 oder 3, **dadurch gekennzeichnet, dass** der Bereich (6) elastisch ausgebildet ist.

5. Zitzengummi nach einem der Ansprüche 1 bis 4, **dadurch gekennzeichnet, dass** der Bereich (6) aus einem Material gebildet ist, welches sich von dem Material des Schaftteils (5) und/oder des Kopfteils (2) unterscheidet, vorzugsweise eine höhere Elastizität aufweist.

6. Zitzengummi nach einem oder mehreren Ansprüchen 1 bis 5, **dadurch gekennzeichnet, dass** der Ringschlauch (4) einen im Wesentlichen elliptischen Querschnitt aufweist.

7. Zitzengummi nach wenigstens einem der vorhergehenden Ansprüche 1 bis 6, **dadurch gekennzeichnet, dass** der Ringschlauch (4) einen Querschnitt mit einer lichten Höhe (H) und einer lichten Breite (B) aufweist, wobei das Verhältnis der Höhe zur Breite kleiner 0,9 ist, vorzugsweise zwischen 0,75 und 0,4 liegt, insbesondere 0,5 beträgt.

8. Zitzengummi nach wenigstens einem der vorhergehenden Ansprüche 1 bis 7, **dadurch gekennzeichnet, dass** innerhalb des Ringschlauchs (4) und wenigstens über einen Teil des Umfangs wenigstens eine Rippe (15) vorgesehen ist.

9. Zitzengummi nach Anspruch 8, **dadurch gekennzeichnet, dass** wenigstens zwei Rippen (15) vorgesehen sind, wobei diese vorzugsweise äquidistant zueinander angeordnet sind.

10. Zitzengummi nach wenigstens einem der vorhergehenden Ansprüche 1 bis 9, **dadurch gekennzeichnet, dass** der Ringschlauch (4) in Umfangsrichtung betrachtet einen Verbindungsbereich (10) aufweist.

11. Zitzengummi nach Anspruch 10, **dadurch gekennzeichnet, dass** der Verbindungsbereich (10) durch eine form- und/oder kraftschlüßige Verbindung gebildet wird.

12. Zitzengummi nach Anspruch 10 oder 11, **dadurch gekennzeichnet, dass** der Verbindungsbereich (10) durch eine Klebeverbindung gebildet wird.

13. Zitzengummi nach wenigstens einem der vorhergehenden Ansprüche 1 bis 12, **dadurch gekennzeichnet, dass** das Kopfteil (2) aus einem Material gebildet ist, welches gegenüber dem Material des Schaftteils (5) weicher ist.

14. Zitzengummi nach einem oder mehreren Ansprüchen 1 bis 13, **dadurch gekennzeichnet, dass** das Kopfteil (2) und der Bereich (6) oder das Schaftteil (5) und der Bereich (6) oder das Kopfteil (2) und der Bereich (6) und das Schaftteil (5) mittels des Zwei-Komponenten-Spritzverfahrens hergestellt sind.

## Claims

1. Teat cup rubber liner (1) for use on a teat cup, with a head part (2) having an insertion opening (3) for a teat of an animal, wherein said insertion opening is bounded by an annular tube (4), and with a shaft part (5) which is connected to the head part (2), **characterized in that** at least one region (6) permitting a relative movement between the head part (2) and shaft part (5) is provided between the head part (2) and the shaft part (5), and **in that** the annular tube (4) is at least partially filled with a fluid, the fluid using glycerol or propylene glycol or one of the two in the form of a water mixture.

2. Teat cup rubber liner according to Claim 1, **characterized in that** the region (6) is designed in the manner of a joint.

3. Teat cup rubber liner according to Claim 1 or 2, **characterized in that** the region (6) is of undulating design in cross section.

4. Teat cup rubber liner according to Claim 1, 2 or 3, **characterized in that** the region (6) is of elastic design.

5. Teat cup rubber liner according to one of Claims 1 to 4, **characterized in that** the region (6) is formed from a material which differs from the material of the shaft part (5) and/or of the head part (2), and preferably has a higher degree of elasticity.

6. Teat cup rubber liner according to one or more of Claims 1 to 5, **characterized in that** the annular tube (4) has a substantially elliptical cross section.

7. Teat cup rubber liner according to at least one of the preceding Claims 1 to 6, **characterized in that** the annular tube (4) has a cross section with a clear height (H) and a clear width (B), the ratio of the height to the width being smaller than 0.9, preferably being between 0.75 and 0.4, and in particular being 0.5.

8. Teat cup rubber liner according to at least one of the preceding Claims 1 to 7, **characterized in that** at least one rib (15) is provided within the annular tube (4) and at least over part of the circumference.

9. Teat cup rubber liner according to Claim 8, **characterized in that** at least two ribs (15) are provided, said ribs preferably being arranged equidistantly from each other.

10. Teat cup rubber liner according to at least one of the preceding Claims 1 to 9, **characterized in that** the annular tube (4) has a connecting region (10), as viewed in the circumferential direction.

11. Teat cup rubber liner according to Claim 10, **characterized in that** the connecting region (10) is formed by a form-fitting and/or frictional connection.

12. Teat cup rubber liner according to Claim 10 or 11, **characterized in that** the connecting region (10) is formed by an adhesive connection.

13. Teat cup rubber liner according to at least one of the preceding Claims 1 to 12, **characterized in that** the head part (2) is formed from a material which is softer than the material of the shaft part (5).

14. Teat cup rubber liner according to one or more of Claims 1 to 13, **characterized in that** the head part (2) and the region (6), or the shaft part (5) and the region (6), or the head part (2) and the region (6) and the shaft part (5) are produced by means of two-component injection moulding.

## Revendications

1. Caoutchouc pour trayon (1) destiné à être utilisé sur un récipient de traite, comprenant une partie de tête (2) avec une ouverture d'insertion (3) pour un trayon d'un animal, cette ouverture d'insertion étant limitée par un tuyau annulaire (4), et comprenant une partie de tige (5) connectée à la partie de tête (2), **caractérisé en ce qu'**entre la partie de tête (2) et la partie de tige (5) est prévue au moins une région (6) qui permet un mouvement relatif entre la partie de tête (2) et la partie de tige (5), **en ce que** le tuyau annulaire (4) est rempli au moins en partie avec un fluide, le fluide utilisant de la glycérine ou du propylèneglycol ou un mélange des deux en tant que mélange aqueux.

2. Caoutchouc pour trayon selon la revendication 1, **caractérisé en ce que** la région (6) est réalisée sous forme articulée.

3. Caoutchouc pour trayon selon la revendication 1 ou 2, **caractérisé en ce que** la région (6) est réalisée sous forme ondulée en section transversale.

4. Caoutchouc pour trayon selon la revendication 1, 2 ou 3, **caractérisé en ce que** la région (6) est réalisée sous forme élastique.

5. Caoutchouc pour trayon selon l'une quelconque des revendications 1 à 4, **caractérisé en ce que** la région (6) est formée d'un matériau qui se distingue du matériau de la partie de tige (5) et/ou de la partie de tête (2), de préférence qui présente une plus grande élasticité.

6. Caoutchouc pour trayon selon l'une quelconque ou plusieurs des revendications 1 à 5, **caractérisé en ce que** le tuyau annulaire (4) présente une section transversale sensiblement elliptique.

7. Caoutchouc pour trayon selon au moins l'une quelconque des revendications précédentes 1 à 6, **caractérisé en ce que** le tuyau annulaire (4) présente une section transversale avec une hauteur intérieure (H) et une largeur intérieure (B), le rapport de la hauteur à la largeur étant inférieur à 0,9, de préférence étant compris entre 0,75 et 0,4, notamment valant 0,5.

8. Caoutchouc pour trayon selon au moins l'une quelconque des revendications précédentes 1 à 7, **caractérisé en ce qu'**à l'intérieur du tuyau annulaire (4) et au moins sur une partie de la circonférence est prévue au moins une nervure (15).

9. Caoutchouc pour trayon selon la revendication 8, **caractérisé en ce qu'**au moins deux nervures (15) sont prévues, celles-ci étant disposées de préférence de manière équidistante l'une par rapport à l'autre.

10. Caoutchouc pour trayon selon au moins l'une quelconque des revendications précédentes 1 à 9, **caractérisé en ce que** le tuyau annulaire (4) présente, considéré dans la direction périphérique, une région de connexion (10).

11. Caoutchouc pour trayon selon la revendication 10, **caractérisé en ce que** la région de connexion (10) est formée par une connexion par engagement par coopération de forme et/ou par engagement par force.

12. Caoutchouc pour trayon selon la revendication 10 ou 11, **caractérisé en ce que** la région de connexion (10) est formée par une connexion par adhésion.

13. Caoutchouc pour trayon selon au moins l'une quelconque des revendications précédentes 1 à 12, **caractérisé en ce que** la partie de tête (2) est formée en un matériau qui est plus souple que le matériau de la partie de tige (5).

14. Caoutchouc pour trayon selon l'une quelconque ou plusieurs des revendications 1 à 13, **caractérisé en ce que** la partie de tête (2) et la région (6) ou la partie de tige (5) et la région (6) ou la partie de tête (2) et la région (6) et la partie de tige (5) sont fabriquées au moyen d'un procédé de moulage par injection à deux composants.
